# EUROPEAN PATENT SPECIFICATION

(11) **EP 1 437 436 B1**
(45) Date of publication and mention of the grant of the patent: **24.10.2007**
(21) Application number: 03258259.5
(22) Date of filing: 31.12.2003
(51) Int. Cl.: D06F 95/00

(54) **A collection bin for a laundry**
Sammelbehälter für eine Wäscherei
Poubelle de ramassage pour une blanchisserie

(30) Priority: 07.01.2003 GB 0300259
(43) Date of publication of application: 14.07.2004
(73) Proprietor: Jensen UK Ltd., Banbury, Oxfordshire OX16 4XL (GB)
(72) Inventor: Nield, Simon Anthony, Banbury, Oxfordshire OX17 3RD (GB)
(74) Representative: Stanley, Michael Gordon

(56) References cited:
- EP-A- 1 253 235
- FR-A- 2 689 872
- GB-A- 947 066
- US-A- 1 597 527
- US-A- 2 327 473
- US-A- 4 332 047
- US-A- 6 116 849

## Description

### Field

This invention relates to collecting bins that are used in commercial laundries in particular for the sorting of laundry before or after washing.

### Background of the Invention

In commercial laundries the items to be washed, or which have already been washed, are typically sorted by hand into the different classifications and weighed into the correct batch size for further processing. The items are sorted into multiple hoppers or bags usually between 1.5m and 2.5m in height that are held at the ground so that they can be weighed.

With some sorting systems the items are sorted directly into the bags. When the correct batch weight has been reached within the bag it is released from the static and replaced by an empty bag so that sorting can continue. The first bag is transported on an overhead rail system to the next stage in the process. Other sorting systems utilise a stationary hopper or sack. When the correct batch weight has been reached within the hopper/sack it is discharged onto a moving conveyor belt. This conveyor belt then deposits the batch of items into a bag which is then transported on an overhead rail system to the next stage in the process with both of these sorting systems it is necessary to have either a raised platform for the sorting operation or an excavation in the front for the sorting station to be mounted in, to achieve a working level for convenient sorting.

This has a number of disadvantages:
a) the operator is working above ground level and must be protected from mis-hap.
b) elevated work stations are expensive to build, and
c) the laundry delivery system, whether manual or by conveyor, has to deliver the items to be sorted to the elevated work platform so that for example a conveyor would need to be elevated for delivery to the platform. This is again inconvenient and expensive.
Alternative floor excavation is also expensive.

Another arrangement is shown in US 6116 849 A which discloses a laundry bin assembly in which the bin is lifted and tilted in order to empty its contents. Similar arrangements are shown in EP 1253 235 A and FR 2689 872 A.

The present invention provides a collection bin for use in a commercial laundry which can be conveniently loaded by hand at floor level without the need for floor excavation and yet discharge laundry onto a conveyor also located on the same level.

### Statements of Invention

According to the present invention there is provided a laundry collection bin assembly for a commercial laundry and which comprises a frame resting on a floor surface, nominally the ground, a bin supported in the frame, the bin having a mouth oriented to receive items of laundry and a bottom supporting said items within the bin, the frame further including a track having an upward inclination relative to the floor with the bin being displaceable along the track for both upwards movement away from the floor and translational movement relative to the floor from a lowered position one side of the conveyor to a raised position above the conveyor characterised in that the bottom of the bin is closed in the lowered position and open in the raised position above a conveyor to permit discharge of any items through the bottom thereof bin onto the conveyor.

Preferably the track comprises a pair of spaced apart substantially parallel rails arranged one on each side of the bin and on which the movement of the bin is guided. The rails may comprise "U" section channel with the mouths of the two channels arranged in opposition, and bearing means mounted on the bin are engagable within the opposed channels. The track is preferably arranged with one end of the track being adjacent the floor and the other end being cantilevered outwards from said frame. The preferred track is arcuate in form. The bin may be held in the frame in a tilted condition to present an inclined mouth towards a manual operator. The angle of inclination of the bin to the ground increases as the bin moves along the track towards its discharge position. Preferably the bin is inclined at about 45° in the lowered position and about 60° in the raised discharge position. This is to ensure that all items are discharged under gravity from the bin.

The bin is moved along the rails by at least one actuator operable between the frame and the bin. The actuator(s) may be any suitable form of actuator for example pneumatic actuators, hydraulic actuators, electrical solenoid operated actuators, mechanical actuators etc. Preferably two actuators are arranged one on each side of the bin.

The bin is substantially square in section and when in a lowered position is tilted at about 45° to the vertical with the forward edge of the bin mouth being between less than 1100mm, and preferably between 850-950 mm, above the floor level. The bottom of the bin is formed by a shutter secured to the frame so that the shutter opens as the bin moved along the track towards the discharge position. The shutter may be arcuate and arranged concentrically with the arcuate track.

The frame may comprise two parts, a base part standing on the floor, and an upper part on which the track and bin are mounted , with the upper part resting on the base part, and a load sensor acts between the two parts for indication to an operator when the bin is nominally full to capacity.

According to a further aspect of the invention there is provided a commercial laundry system including a conveyor with at least one collection bin assembly according to the present invention arranged to one side of the conveyor, the discharge position for said bin being located above the conveyor.

### Description of the Drawings

The invention will be described by way of example and with reference to the accompanying drawings in which:
- Fig. 1: is a side elevation of a collection bin according to the present invention with the bin in the lowered position,
- Fig. 2: is the elevation shown in Fig. 1 with the bin in the raised discharge position, and
- Fig. 3: is plan view of the collection bin of Fig 2.

### Detailed Description of the Invention

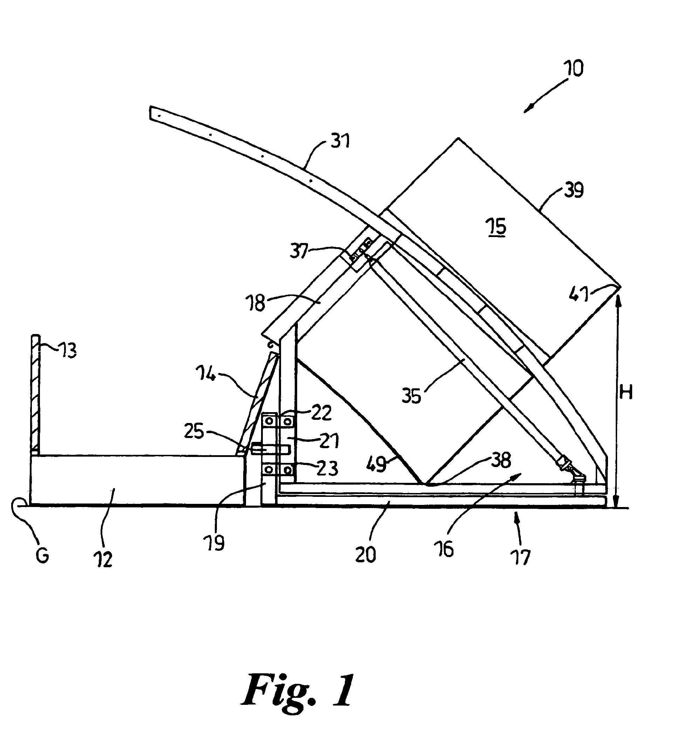

With reference to Figs. 1 to 3 there is shown a collection bin assembly 10 arranged to one side of a conveyor 12 having valances 13,14 to guide laundry discharged from the bin assembly onto the conveyor 12.

The collection bin assembly comprises a bin 15 mounted on a steel support frame 16. The support frame is formed from two parts a base part 17 which stands on a supporting floor, e.g. the floor G, and an upper frame part 18 resting on the base part 17. The base part 17 has a rectangular base frame 20 which sits on the floor with upright struts 19 at the two corners of the base part adjacent the conveyor 12. The upper part 18 comprises two spaced apart side frames 21 linked by cross-struts. The upper part 18 is secured to the base part 17 by two links 22 ,23 pivotally connected between the side frames 21 and the uprights 19. A load sensor 25 acts between cross members on the base part and upper part to measure the load transferred to the base part. One side of each side frame 21 is formed from an elongated arcuate rail 31.

The two arcuate rails 31 are substantially parallel to each other and form a track extending from adjacent the base frame 20 in an arc outwardly beyond the side frame 21 and in use extending beyond the base frame 20 and over the nearside portion of the conveyor. The rails are 31 are linked at their lower ends by a cross-members 32 and through the cross-struts linking the side frames 21. The lower ends of the rails 31 are located at the front of the bin assembly which in use will be accessible by an operator and the other raised ends of the rails will be at the rear of the bin assembly to bridge a conveyor. The rails 31 are of a substantially "U" shaped cross-section steel and are arranged with the open channels facing towards each other. The bin 15 is a substantially square section bin having four spaced apart roller bearings 33 mounted on each side of the bin. The roller bearings 33 are arranged on each side of the bin 15 in an arcuate array concentric with the rails and engage in the respective channels in the adjacent rails 31 so as to run freely within the two opposing channels allowing the bin to move longitudinally of the rails. The two rails 31 guide and support the bin. Other alternative types of bearing may be used e.g. solid non rotational low friction shoes.

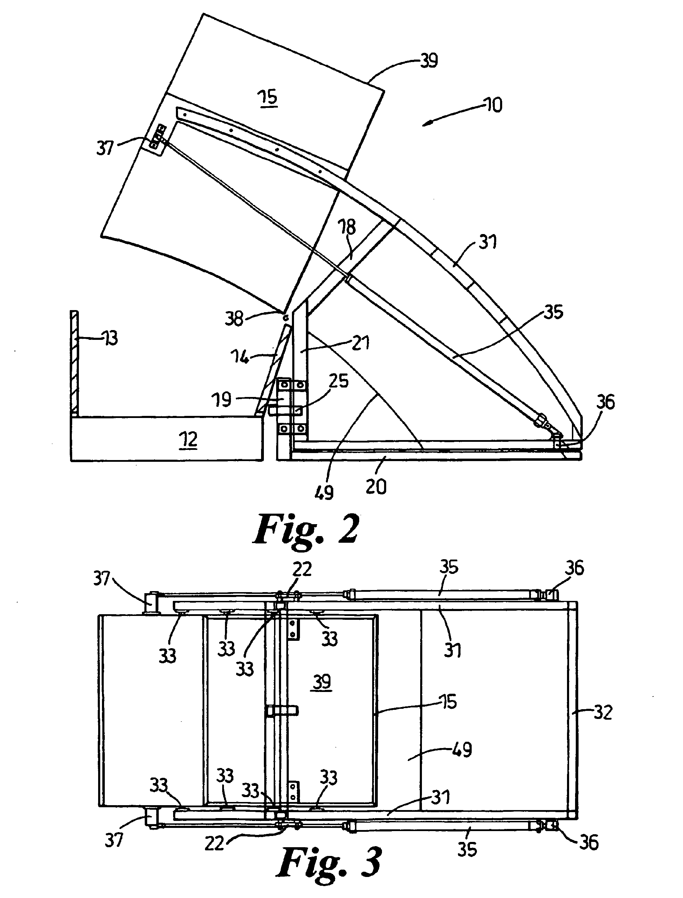

A pair of pneumatic actuators 35 are mounted one on each side of the bin 15 and act between a lower front part of the side frame 21 adjacent the cross member 32 and a side of the bin. The actuators 35 are shown in an extended condition in Fig.2. Each actuator housing is pivotally connected to a lug 36 on the respective side frame 21 and its actuator rod is pivotally connected to a bracket or pin 37 on the side of the bin 15. Other types of actuators may be used e.g hydraulic actuators, as is desired.

The bin 15 in its lower position shown in Fig.1 is tilted towards the front of the bin assembly at an angle of about 45° to the horizontal with the lower forward edge 38 of the bin being proximate the floor. This presents the mouth 39 of the bin 15 towards the operator in an orientation that facilitates the collection of laundry items projected towards the bin. Ideally the height H of the forward upper edge 41 forming the mouth 39 of the bin should be about 850-950 mm above floor level, and more preferably about 900mm. This is a preferred height for manual sorting of laundry. Operation of the actuators 35 moves the bin along the rails 31 between the lowered position shown in Fig.1 and the raised discharge position shown in Fig. 2. As the bin moves along the arcuate rails the angle of tilt of the bin changes to a higher angle relative to the horizontal, preferably to an angle at least 60° when at the discharge position. The increase in angle is to facilitate the discharge under gravity of the contents of the bin, particularly when wet.

The bottom of the bin is closed in the lowered position and opens to discharge the contents onto the conveyor 12. In the present embodiment the lower end of the bin 15 is open and the bottom of the bin is formed by a shutter 49 fixed to the side frames 21. The shutter 49 is arcuate in shape being concentric to the rails 31 and lower side edges of the bin are also arcuate in shape so as to accommodate the shutter 49.

An operator will stand at the front of the bin assembly to sort and load laundry into the bin until the load sensor indicates that the bin contains a desired weight of laundry. Controls (not shown) for the assembly will then be operated to discharge laundry onto the conveyor 12 and the actuators 35 will extend to move the bin towards its raised discharge position. As the actuators 35 extend to move the bin 15 from its lowered condition to its raised discharge position, the lower end of the bin moves across the shutter 49 and as it moves past the shutter 49, the lower end gradually opens becoming fully open when bin 15 has reached the end of the rails 31. The gradual opening of the bin allows the bin contents to fall in a controlled manner onto the conveyor. Once the laundry has been emptied from the bin 15 the actuator contract and move the bin back to the lower condition to receive more laundry.

In an alternative arrangement (not shown) the two guide rails could each comprise two joined sections of rail at different inclinations to the horizontal in which case the array of roller bearings 33 would need to be arranged to suit.

In another arrangement the rails could comprise a pair of inclined straight rails in which case the angle of inclination of the bin remains constant throughout is displacement and if tilted should have an inclination sufficient to ensure that laundry discharges from the bin. The angle of inclination should be at least 45° to the horizontal and more preferably around 60°.

Furthermore, the bin 15 may be open and closed when be emptied and filled respectively, using alternative closures to the shutter. For example a flap door may be pivoted to the front bottom edge 38 of the bin which is raised and lowered by a co-operating abutment on the upper frame as the bin moves past the abutment.

## Claims

1. A laundry collection bin assembly (10) for use in a commercial laundry with a co-operating conveyor (12) and which comprises a frame (16) resting on a floor (G) and a bin (15) supported in the frame (16), the bin (15) having a mouth (39) oriented to receive items of laundry and a bottom (49) supporting said items within the bin, the frame (16) further including a track (31) having an upward inclination relative to the floor (G) with the bin (15) being displaceable along the track (31)for both upward movement away from the floor and translational movement relative to the floor (G) from a lowered position to one side of the conveyor to a raised position above the conveyor, **characterised in that** the bottom (49) of the bin (15) is closed in the lowered position and is open in the raised position above the conveyor (12) to permit discharge of any items in the bin (15) through the bottom (49) thereof onto the conveyor.

2. An assembly as claimed in Claim 1, **characterised in that** the track (31) comprises a pair of spaced apart substantially parallel rails (31) arranged one to each side of a pair of opposite sides of the bin (15) with one end adjacent the floor (G) and the other end cantilevered outwards from the frame (16) to provide the raised discharge position

3. An assembly as claimed in Claim 2, **characterised in that** the rails (31) comprise "U" section channel with the mouths of the two channels arranged in opposition, and bearing means (33) mounted on the bin are engagable within the opposed channels.

4. An assembly as claimed in any one of Claims 1 to 4, **characterised in that** the track (31) is arcuate having one end being adjacent the floor (G) with said track extending away therefrom so that its raised end in use is located above the conveyor (12).

5. An assembly as claimed in any one of Claims 1 to 5 , **characterised in that** the bin (15) is held in the frame (16) in a tilted condition with its mouth (39) presented towards a manual operator, and the angle of inclination of the bin (15) to the ground increases as the bin moves along the track towards its raised discharge position.

6. An assembly as claimed in any one of Claims 1 to 5, **characterised in that** the bin (15) is moved along the track (31) by at least one actuator (35) operable between the frame (16) and the bin (15).

7. An assembly as claimed in any one of Claims 1 to 6, **characterised in that** the bin (15) is substantially square in section and when in the lowered position is tilted at about 45° to the vertical with the forward edge (41) of its mouth (39) being a maximum height (H) of 1100 mm above the floor (G) with its forward bottom edge (38) being proximate the floor.

8. An assembly as claimed in any one of Claims 1 to 9, **characterised in that** the bottom (49) of the bin (15) gradually opens as the bin (15) is moved along the track (31) to its raised discharge position.

9. An assembly as claimed in Claim 8, **characterised in that** the bottom (49) of the bin (15) is formed by a shutter (49) secured to the frame (16) so that the bottom (49) opens as the bin moves towards the raised position.

10. An assembly as claimed in Claim 9 when dependant upon Claim 4, wherein the shutter (49) is arcuate and is arranged concentrically with the arcuate track (31).

11. An assembly as claimed in any one of Claims 1 to 10, **characterised in that** the frame comprises two parts (17 & 18) being a base part (17) standing on the floor (G), and an upper part (18) on which the track (31) and bin (15) are mounted , the upper part resting on the base part, and a load sensor (25) acts between the two parts (17 & 18) to indicate to an operator when the bin is nominally full to capacity.

## Patentansprüche

1. Wäschesammelbehälter-Baugruppe (10) zur Verwendung in einer gewerblichen Wäscherei mit einem zusammenwirkenden Fördermittel (12) und die ein auf einem Fußboden (G) ruhendes Gestell (16) und einen in dem Gestell (16) getragenen Behälter (15) umfasst, wobei der Behälter (15) eine Öffnung (39), ausgerichtet zum Aufnehmen von Wäschestücken, und einen Boden (49), der die Stücke innerhalb des Behälters trägt, hat, wobei das Gestell (16) ferner eine Bahn (31) einschließt, die eine Aufwärtsneigung im Verhältnis zum Fußboden (G) hat, wobei der Behälter (15) längs der Bahn (31) sowohl für eine Aufwärtsbewegung weg vom Fußboden als auch für eine Translationsbewegung im Verhältnis zum Fußboden (G) von einer abgesenkten Position zu einer Seite des Fördermittels zu einer angehobenen Position oberhalb des Fördermittels verschoben werden kann, **dadurch gekennzeichnet, dass** der Boden (49) des Behälters (15) in der abgesenkten Position geschlossen ist und in der angehobenen Position oberhalb des Fördermittels (12) offen ist, um ein Entladen jeglicher Stücke im Behälter (15) durch den Boden (49) desselben auf das Fördermittel zu ermöglichen.

2. Baugruppe nach Anspruch 1, **dadurch gekennzeichnet, dass** die Bahn (31) ein Paar von mit Zwischenraum angeordneten, im Wesentlichen parallelen Schienen (31) umfasst, von denen jeweils eine auf jeder Seite eines Paars von gegenüberliegenden Seiten des Behälters (15) angeordnet ist, wobei das eine Ende an den Fußboden (G) angrenzt und das andere Ende vom Gestell (16) nach außen freitragend ist, um die angehobene Entladeposition bereitzustellen.

3. Baugruppe nach Anspruch 2, **dadurch gekennzeichnet, dass** die Schienen (31) "U"-förmige Kanäle, wobei die Öffnungen der zwei Kanäle in Gegenstellung angeordnet sind, und am Behälter angebrachte Lagermittel (3), die innerhalb der einander gegenüberliegenden Kanäle in Eingriff gebracht werden können, umfassen.

4. Baugruppe nach einem der Ansprüche 1 bis 3, **dadurch gekennzeichnet, dass** die Bahn (31) bogenförmig ist, wobei sie ein Ende hat, das an den Fußboden (G) angrenzt, wobei sich die Bahn von demselben weg erstreckt, so dass ihr angehobenes Ende bei Anwendung oberhalb des Fördermittels (12) angeordnet ist.

5. Baugruppe nach einem der Ansprüche 1 bis 4, **dadurch gekennzeichnet, dass** der Behälter (15) im Gestell (16) in einem gekippten Zustand gehalten wird, wobei seine Öffnung (39) zu einem Handbediener hin zeigt und der Neigungswinkel des Behälters (15) zum Boden zunimmt, wenn sich der Behälter längs der Bahn zu seiner angehobenen Entladeposition hin bewegt.

6. Baugruppe nach einem der Ansprüche 1 bis 5, **dadurch gekennzeichnet, dass** der Behälter (15) durch wenigstens einen Stellantrieb (35), der zwischen dem Gestell (16) und dem Behälter (15) betrieben werden kann, längs der Bahn (31) bewegt wird.

7. Baugruppe nach einem der Ansprüche 1 bis 6, **dadurch gekennzeichnet, dass** der Behälter (15) im Querschnitt im Wesentlichen quadratisch ist und, wenn er sich in der abgesenkten Position befindet, mit etwa 45° zur Vertikalen gekippt ist, wobei sich die Vorderkante (41) seiner Öffnung (39) bei einer maximalen Höhe (H) von 1100 mm über dem Fußboden (G) befindet, wobei sich seine vordere Unterkante (38) nahe dem Boden befindet.

8. Baugruppe nach einem der Ansprüche 1 bis 7, **dadurch gekennzeichnet, dass** sich der Boden (49) des Behälters (15) allmählich öffnet, wenn der Behälter (15) längs der Bahn (31) zu seiner angehobenen Entladeposition bewegt wird.

9. Baugruppe nach Anspruch 8, **dadurch gekennzeichnet, dass** der Boden (49) des Behälters (15) durch einen Verschluss (49) gebildet wird, der so am Gestell (16) befestigt ist, dass sich der Boden (4) öffnet, wenn sich der Behälter zur angehobenen Position hin bewegt.

10. Baugruppe nach Anspruch 9, wenn abhängig von Anspruch 4, **dadurch gekennzeichnet, dass** der Verschluss (49) bogenförmig ist und konzentrisch mit der bogenförmigen Bahn (3 1) angeordnet ist.

11. Baugruppe nach einem der Ansprüche 1 bis 10, **dadurch gekennzeichnet, dass** das Gestell zwei Teile (17 & 18) umfasst, die ein Basisteil (17), das auf dem Fußboden (G) steht, und ein oberes Teil (18), an dem die Bahn (31) und der Behälter (15) angebracht sind, sind, wobei das obere Teil auf dem Basisteil ruht und ein Lastsensor (25) zwischen den zwei Teilen (17 & 18) wirkt, um einem Bediener anzuzeigen, wenn der Behälter nominell bis zum Fassungsvermögen voll ist.

## Revendications

1. Assemblage de panier de collecte du linge (10) destiné à être utilisé dans une blanchisserie commerciale avec un transporteur de coopération (12) et comprenant un cadre (16) reposant sur un sol (G) et un panier (15) supporté dans le cadre (16), le panier (15) comportant une embouchure (39) orientée de sorte à recevoir des articles de blanchisserie et un fond (49) supportant lesdits articles dans le panier, le cadre (16) englobant en outre une piste (31) inclinée vers le haut par rapport au sol (G), le panier (15) pouvant être déplacé le long de la piste (31) en vue d'un déplacement vers le haut, à l'écart du sol, et d'un déplacement par translation par rapport au sol (G), d'une position abaissée sur un côté du transporteur vers une position surélevée au-dessus du transporteur, **caractérisée en ce que** le fond (49) de la corbeille (15) est fermé dans la position abaissée et ouvert dans la position surélevée au-dessus du transporteur (12) pour permettre de décharger de quelconques articles contenus dans le panier (15) à travers le fond (49) sur le transporteur.

2. Assemblage selon la revendication 1, **caractérisé en ce que** la piste (31) comprend une paire de rails espacés pratiquement parallèles (31), un rail étant agencé sur chaque côté d'une paire de côtés opposés du panier (15), une extrémité étant adjacente au sol (G) et l'autre extrémité étant agencée en porte-à-faux vers l'extérieur du cadre (16) pour établir une position de décharge surélevée.

3. Assemblage selon la revendication 2, **caractérisé en ce que** les rails (31) comprennent un canal à section en « U », les embouchures des deux canaux étant opposées, des moyens de support (33) montés sur le panier pouvant s'engager dans les canaux opposés.

4. Assemblage selon l'une quelconque des revendications 1 à 3, **caractérisé en ce que** la piste (31) est arquée, comportant une extrémité adjacente au sol (G), ladite piste s'étendant à l'écart de celui-ci, de sorte que son extrémité surélevée est agencée en service au-dessus du transporteur (12).

5. Assemblage selon l'une quelconque des revendications 1 à 4, **caractérisé en ce que** le panier (15) est retenu dans le cadre (16) dans un étant incliné, son embouchure (39) étant orientée vers un opérateur manuel l'angle d' inclinaison du panier (15) par rapport au sol étant accru lors du déplacement du panier le long de la piste vers sa position de décharge surélevée.

6. Assemblage selon l'une quelconque des revendications 1 à 5, **caractérisé en ce que** le panier (15) est déplacé le long de la piste (31) par au moins un dispositif d'actionnement (35) pouvant être actionné entre le cadre (16) et le panier (15).

7. Assemblage selon l'une quelconque des revendications 1 à 6, **caractérisé en ce que** le panier (15) a une section pratiquement carrée, et est incliné dans la position abaissée à environ 45° par rapport à la verticale, le bord avant (41) de son embouchure (39) étant situé à une hauteur maximale (H) de 1100 mm au-dessus du sol (G), son bord inférieur avant (38) étant proche du sol.

8. Assemblage selon l'une quelconque des revendications 1 à 7, **caractérisé en ce que** le fond (49) du panier (15) est ouvert progressivement lors du déplacement du panier (15) le long de la piste (31) vers sa position de décharge.

9. Assemblage selon la revendication 8, **caractérisé en ce que** le fond (49) du panier (15) est formé par un obturateur (49) fixé sur le cadre (16), de sorte que le fond (49) s'ouvre lors du déplacement du panier vers la position surélevée.

10. Assemblage selon la revendication 9, dépendant de la revendication 4, dans lequel l'obturateur (49) est arqué et est agencé de manière concentrique par rapport au rail arqué (31).

11. Assemblage selon l'une quelconque des revendications 1 à 10, **caractérisé en ce que** le cadre comprend deux parties (17 & 18), à savoir une partie de base (17) reposant sur le sol (G), et une partie supérieure (18) sur laquelle sont montés le rail (31) et le panier (15), la partie supérieure reposant sur la partie de base, un capteur de charge (25) agissant entre les deux parties (17 & 18) pour indiquer à un opérateur le remplissage à capacité nominale du panier.
